Europäisches Patentamt

European Patent Office

Office européen des brevets

(19)

(11) EP 0 824 777 B1

(12) EUROPÄISCHE PATENTSCHRIFT

(45) Veröffentlichungstag und Bekanntmachung des Hinweises auf die Patenterteilung:
**31.03.1999 Patentblatt 1999/13**

(21) Anmeldenummer: 96914849.3

(22) Anmeldetag: **07.05.1996**

(51) Int Cl.⁶: **H02J 3/18**

(86) Internationale Anmeldenummer:
**PCT/DE96/00792**

(87) Internationale Veröffentlichungsnummer:
**WO 96/36097 (14.11.1996 Gazette 1996/50)**

(54) **VERFAHREN UND VORRICHTUNG ZUR STATISCHEN UND DYNAMISCHEN STÜTZUNG EINER NETZSPANNUNG MITTELS EINER STATISCHEN KOMPENSATIONSEINRICHTUNG MIT EINEM SELBSTGEFÜHRTEN STROMRICHTER**

PROCESS AND DEVICE FOR THE STATIC AND DYNAMIC SUPPORT OF A MAINS VOLTAGE BY MEANS OF A STATIC COMPENSATOR WITH A SELF-COMMUTATED CONVERTER

PROCEDE ET DISPOSITIF DE SOUTIEN STATIQUE ET DYNAMIQUE D'UNE TENSION DE RESEAU A L'AIDE D'UN DISPOSITIF DE COMPENSATION STATIQUE POURVU D'UN CONVERTISSEUR AUTOCOMMUTE

(84) Benannte Vertragsstaaten:
**CH DE FR GB LI**

(30) Priorität: **09.05.1995 DE 19516604**

(43) Veröffentlichungstag der Anmeldung:
**25.02.1998 Patentblatt 1998/09**

(73) Patentinhaber: **SIEMENS AKTIENGESELLSCHAFT 80333 München (DE)**

(72) Erfinder: **WEINHOLD, Michael D-91056 Erlangen (DE)**

(56) Entgegenhaltungen:
**EP-A- 0 476 618          DE-A- 3 429 116
US-A- 5 187 427**

Printed by Jouve, 75001 PARIS (FR)

# Beschreibung

Die Erfindung bezieht sich auf ein Verfahren zur statischen und dynamischen Stützung einer Netzspannung an einem Netzknoten mittels einer statischen Kompensationseinrichtung, die einen selbstgeführten Stromrichter mit wenigstens einem kapazitiven Speicher und einen Transformator aufweist, und auf eine Vorrichtung zur Durchführung dieses Verfahren.

Die Netze der elektrischen Energieversorgung dienen in erster Linie der Übertragung von Wirkleistung. Erzeugte und verbrauchte Leistung müssen immer ausgeglichen sein, sonst kommt es zu Frequenzänderungen. Ebenso wie die Wirkleistungsbilanz muß auch die Blindleistungsbilanz stets so ausgeglichen sein, daß sich tragbare Spannungsverhältnisse im Netz ergeben. Die Blindleistung ist vor allem für das Spannungsniveau verantwortlich. Die Wirk- und Blindleistungsbilanz im Netz muß in jedem Zeitpunkt so ausgeglichen werden, daß Spannung und Frequenz innerhalb der vorgegebenen Grenzen liegen.

Aufgrund steigenden Stromverbrauchs und begrenzten Netzausbaumöglichkeiten werden die Energieübertragungsnetze immer intensiver genutzt. Blindleistungsflüsse im Netz sind Hauptverursacher für Spannungsabfälle und zusätzliche Netzverluste. Durch gezielten Einsatz von Blindleistungsmitteln, wie Kondensatoren und Spulen, können eine ausgeglichene Blindleistungsbilanz im Netz sowie damit die Auswirkungen auf Netzspannung und Netzverluste reduziert werden. Die unterschiedlichen dynamischen Anforderungen können mit schaltbaren oder regelbaren Blindleistungselementen gedeckt werden. Eine kontinuierliche und dynamische Änderung ist jedoch praktisch nur mit Stromrichterschaltungen möglich. Statische Kompensatoren in Thyristortechnik stellen die derzeit wirtschaftlichste Lösung zur dynamischen Blindleistungskompensation dar.

Für Blindleistungs-Kompensationseinrichtungen, die einen selbstgeführten Stromrichter mit einem kapazitiven Speicher aufweisen, sind die Bezeichnungen "Static Var Generator (SVG)", "Advanced Static Var Compensator (ASVC)" oder "Static Condenser (STATCON)" gebräuchlich. Mittels des selbstgeführten Wechselrichters, der die Gleichspannung eines kapazitiven Energiespeichers (Kondensator) in eine Wechselspannung umformt und über einen Transformator (Reaktanz) an einen Netzknoten (PCC=Point of Common Coupling) angeschlossen ist, kann Grundschwingungs-Blindleistung bereitgestellt oder abgeführt werden.

Aus dem Aufsatz "A Comparison of Different Circuit Configurations for an Advanced Static Var Compensator (ASVC)", abgedruckt in "PESC' 92 Record; 23rd Annual IEEE Power Electronics Specialists Conference Toledo, Spain", 1992, Seiten 521 bis 529, ist eine Blindleistungs-Kompensationseinrichtung bekannt. Dieser Aufsatz stellt mehrere ASVC-Schaltungen vor und vergleicht sie miteinander. Die Basisschaltung eines ASVCs besteht aus einem dreiphasigen Wechselrichter mit einem kapazitiven Speicher, wobei dieser Wechselrichter mittels eines Transformators an einem Netzknoten (PCC) angeschlossen ist.

Als Wechselrichter wird entweder ein Zweipunkt-Wechselrichter oder ein Dreipunkt-Wechselrichter verwendet. Diese Wechselrichter werden mittels einer Grundschwingungsfrequenz-Modulation (Vollblocksteuerung) gesteuert, wobei die erreichbare Grundschwingungs-Blindleistung bei einem Dreipunkt-Wechselrichter größer ist als bei einem Zweipunkt-Wechselrichter. Außerdem sind die 5. und 7. Harmonische minimal, wenn der Winkel $\beta$ (Winkelbereich für das Nullpotential) gleich $\pi/12$ ist. Außerdem werden in diesem Aufsatz ASVC-Schaltungen untersucht, die aus zwei Zweipunkt- bzw. Dreipunkt-Wechselrichtern bestehen, wobei unterschiedliche Transformatoren verwendet werden. Mittels dieser Schaltungen sollen die Pulszahl und die Verzerrung des Phasenstromes verringert werden.

In dem Aufsatz "Development of a Large Static Var Generator Using Self-Commutated Inverters for Improving Power System Stability", abgedruckt in "IEEE Transactions on Power Systems", Vol. 8, No. 1, February 1993, pp. 371 bis 377, wird ein "Static Var Generator (SVG)" für 80 MVA vorgestellt. Dieser 80 MVA SVG besteht aus acht Wechselrichtern, deren Brückenzweige jeweils aus sechs in Reihe geschalteten abschaltbaren Thyristoren (GTO) bestehen, die jeweils die gleiche Ausgangsspannung erzeugen, jedoch untereinander jeweils um 7,5° elektrisch verschoben sind. Für diese Phasenverschiebung wird ein spezieller Transformator mit acht Primär- und acht Sekundärwicklungen benötigt. Dieser spezielle Transformator wird mittels eines Haupttransformators an ein Hochspannungsnetz angeschlossen. Dieser Transformatoraufbau benötigt einen Teil der bereitgestellten Blindleistung. Somit erhält man eine Puls zahl von 48 und damit eine Verringerung der Netzrückwirkungen bei gleichzeitig erhöhter Grundschwingungsleistung. Auch bei dieser Blindleistungs-Kompensationseinrichtung (SVG) wird eine Verbesserung der Grundschwingungsleistung nur mit Hilfe von mehreren Wechselrichtern und einem speziellen Transformator erreicht, jedoch die Grundschwingungsausbeute pro Schalteinrichtung des Wechselrichters wird nicht erhöht.

Eine weitere Möglichkeit zur Verbesserung der Grundschwingungsausbeute (Leistung pro Schaltelement) besteht darin, einen Mehrpunkt-Wechselrichter zu verwenden. Im Aufsatz "A High Voltage Large Capacity Dynamic Var Compensator Using Multilevel Voltage Source Inverter", abgedruckt in "PESC' 92 Record, 23rd Annual IEEE Power Electronics Specialists Conference Toledo, Spain", 1992, Seiten 538 bis 545, wird ein Fünfpunkt-Wechselrichter eines SVCs im einzelnen vorgestellt. Durch die Verwendung eines Mehrpunkt-Wechselrichters verbessert sich die Grundschwingungsausbeute bei der vom Wechselrichter erzeugten Wechselspannung.

Aus dem Aufsatz "System Variable Evaluation With Digital Signal Processors for SVC Applications" von G. Welsh, K. Bergmann, L. Hügelschafer, H.-F. Leowald und G. Wild, abgedruckt in "Fifth International Conference on AC and DC Power Transmission", 1991, Seiten 255 bis 260, ist eine Spannungsregelung für einen statischen Kompensator (SVC), bestehend aus einer fest angeschlossenen Kapazität (FC), einer thyristorgesteuerten Spule (TCR) sowie einer thyristorgeschalteten Kapazität (TSC), bekannt, die digital aufgebaut ist. Diese Spannungsregelung ermittelt aus den drei Leiter-Erde-Spannungen eine Systemspannung (Mittelwert der drei Leiter-Leiter-Spannungen, die mit einer Systemsollspannung verglichen werden). Aus der entstehenden Regelabweichung wird mittels eines Spannungsreglers, an dessen Ausgang ein Suszeptanzwert (Blindleitwert) ansteht, ein Steuersignal des Kompensators ermittelt. Diese digitale Regelung verwendet bei Ermittlung der Systemspannung einen Signalprozessor, der Bestandteil eines Mehrprozessor-Regelsystems (SIMADYN D) ist.

In der bereits erwähnten Veröffentlichung "PESC' 92 Record, 23rd Annual IEEE Power Electronics Specialists Conference Toledo, Spain", 1992, Seiten 538 bis 545, wird nicht nur ein Fünfpunkt-Wechselrichter eines SVCs im einzelnen vorgestellt, sondern auch die dazugehörige Regelung. Diese Regelung weist eingangsseitig eine Einrichtung auf, mit der der Mittelwert einer Blindleistungs-Regelabweichung $Q_S$ in Abhängigkeit eines von einer Last geforderten Blindleistungswertes $Q_L$ und eines vom selbstgeführten Wechselrichter gelieferten Blindleistungswertes $Q_l$ bestimmt wird. Ein nachgeschalteter PI-Regler erzeugt aus diesem Wert $Q_S$ eine Stellgröße $\phi_m$ (Phasenwinkel für den Wechselrichter). Der Steuersatz, der optimierte Pulsmuster aufweist, generiert aus der Stellgröße $\phi_m$ und einem Modulationswert $M_i$ Steuersignale für den selbstgeführten Wechselrichter. Diese Regelung sorgt dafür, daß die Blindleistungs-Regelabweichung $Q_S$ zu Null geregelt wird. Ist die Regelabweichung $Q_S=0$, so ist die Stellgröße $\phi_m=0$ und die Ausgangsspannung des Wechselrichters ist in Phase mit der Spannung am Verknüpfungspunkt PCC. Diese Regelung hat die Aufgabe, daß die von der Last geforderte Blindleistung vom selbstgeführten Wechselrichter geliefert wird. Diese Regelung kann daher nicht die Netzspannung am Verknüpfungspunkt (Anschlußpunkt der Kompensationseinrichtung an das Netz) statisch oder dynamisch stützen.

Der Erfindung liegt nun die Aufgabe zugrunde, ein Verfahren und eine Vorrichtung anzugeben, mit der die Netzspannung am Netzknoten statisch und dynamisch gestützt werden kann.

Diese Aufgabe wird erfindungsgemäß mit den Merkmalen des Anspruchs 1 bzw. des Anspruchs 6 gelost.

Um die Netzspannung am Verknüpfungspunkt auf eine konstante Amplitude zu regeln, muß die Kompensationseinrichtung mit dem Netz Verschiebungsblindleistung austauschen. Ausgehend von einem stationären Betriebspunkt der Kompensationseinrichtung, bei dem keine Leistung mit dem Netz ausgetauscht wird (Leerlauf), liefert bei einem plötzlichen Spannungseinbruch die Kompensationseinrichtung Verschiebeblindleistung an das Netz, wodurch dieser Spannungsabfall rückgängig gemacht wird. Umgekehrt wird bei einer Spannungserhöhung von der Kompensationseinrichtung Verschiebeblindleistung aus dem Netz aufgenommen.

Der erste Teil des Regelverfahrens betrifft die Spannungsregelung, die einen Sollwert für den zweiten Teil des Regelverfahrens erzeugt. Der zweite Teil des Regelverfahrens, das Augenblicksregelverfahren, erzeugt aus den bereitgestellten Sollwerten umgehend mit Hilfe der Winkellage des ermittelten Netzspannungs-Raumzeigers am Verknüpfungspunkt eine Stellgröße (Winkellage des Spannungs-Raumzeigers des selbstgeführten Stromrichters der Kompensationseinrichtung), die mittels optimierter Pulsmuster in Schaltzustandssignale gewandelt wird. Diese dynamische Stellgröße sorgt dafür, daß Energie zwischen der Kompensationseinrichtung und dem Netz ausgetauscht wird. Sobald die gewünschte Augenblicksblindleistung erreicht ist (neuer Arbeitspunkt), ist die dynamische Stellgröße wieder Null. Für transiente Vorgänge (Blindleistungsänderung) wird die relative Phasenlage des Stromrichterspannungs-Raumzeigers zum Netzspannungs-Raumzeiger so verstellt, daß sich eine Augenblicksleistung verschieden von Null für diesen transienten Vorgang ergibt, die benötigt wird, damit sich ein neuer Arbeitspunkt (Blindleistungsänderung) einstellen kann.

Durch dieses kaskadierte Regelverfahren kann die Kompensationseinrichtung schnell auf eine veränderte Netzspannung am Verknüpfungspunkt reagieren und die zur Stützung der Netzspannung auf einen vorbestimmten Wert benötigte Augenblicksblindleistung ans Netz abgeben bzw. aus dem Netz aufnehmen.

Vorteilhafte Ausgestaltungen des Verfahrens sind den Unteransprüchen 2 bis 5 zu entnehmen.

Bei einer Vorrichtung zur Durchführung des erfindungsgemäßen Verfahrens für eine statische Kompensationseinrichtung, die einen selbstgeführten Stromrichter mit wenigstens einem kapazitiven Speicher und einem Transformator aufweist, weist diese Vorrichtung einen Spannungsregelkreis mit unterlagertem Augenblicksregelkreis auf, wobei der Ausgang dieses unterlagerten Augenblicksregelkreises mit einem zweiten Eingang eines Differenzbildners verknüpft ist, an dessen ersten Eingang ein Winkellagewert des ermittelten Netzspannungs-Raumzeigers am Netzknoten ansteht. Als Stellgröße für den Steuersatz generiert diese Vorrichtung in Abhängigkeit der Netzspannung am Netzknoten einen Winkellagewert des Stromrichter-Raumzeigers. Da im Steuersatz optimierte Pulsmuster verwendet werden, werden in Abhängigkeit der bestimmten Winkellagewerte des Stromrichter-Raumzeigers Schaltsignale ausgewählt, die den Stromrichter dazu veranlassen, daß sich der gewünschte Spannungs-Raumzeiger am Stromrichterausgang einstellt. Durch diesen Stromrichterspannungs-Raumzeiger erhält man einen veränderten Spannungsabfall (Betrag und Phasenlage) über die Streureaktanz des Transformators, die den Netzstrom derart nachführt, daß während des transienten Vorgangs eine Stromkomponente in Richtung oder Gegenrichtung des Netzspannungs-Raumzeigers und eine zu diesem senkrecht vorhanden ist. Diese Komponente in Richtung oder Gegenrichtung des Netzspannungs-Raumzeigers bildet zusammen mit diesem Raumzeiger eine Augenblicksleistung, die für die geforderte Blindleistungsänderung vorhanden sein muß, damit die kapazitiven Speicher auf- bzw. entladen werden können. Am Ende des transienten Vorgangs haben die kapazitiven Speicher des Stromrichters und der Netzstrom-Raumzeiger entsprechend dem gewünschten Arbeitspunkt entsprechende Spannungen und eine gewünschte Stromkomponente senkrecht zum Netzspannungs-Raumzeiger.

Diese Regel struktur entspricht einer kaskadierten Regelung, wobei ein vom überlagerten langsameren Regelkreis erzeugter Sollwert von einem unterlagerten schnelleren Regelkreis realisiert wird.

Vorteilhafte Ausgestaltungen der Vorrichtung sind den Unteransprüchen 7 bis 9 zu entnehmen.

Zur weiteren Erläuterung des erfindungsgemäßen Verfahrens und der Vorrichtung zur statischen und dynamischen Stützung einer Netzspannung an einem Netzknoten mittels einer statischen Kompensationseinrichtung mit einem Stromrichter mit wenigstens einem kapazitiven Speicher wird auf die Zeichnung Bezug genommen, in der ein Ausführungsbeispiel der erfindungsgemäßen Vorrichtung schematisch veranschaulicht ist.

Figur 1    zeigt ein Blockschaltbild der eingangs genannten Kompensationseinrichtung, angeschlossen an ein Drehstromnetz mit der Vorrichtung zur Durchführung des erfindungsgemäßen Verfahrens, wobei in

Figur 2    das zugehörige reelle Ersatzschaltbild dargestellt ist,

Figur 3    zeigt ein Blockschaltbild des überlagerten Spannungsregelkreises, wobei die

Figuren 4 und 5    jeweils ein Blockschaltbild des unterlagerten Augenblicksregelkreises (Augenblicksblindleistungsregelung, Augenblicksblindstromregelung) darstellt, die

Figur 6    zeigt das zum Ersatzschaltbild nach Figur 2 dazugehörige dynamische Raumzeiger-Diagramm, wogegen in

Figur 7    die Zeigerbilder für den stationären Betrieb dargestellt sind, die

Figur 8    zeigt in einem Raumzeiger-Diagramm den Zusammenhang zwischen einem Stromrichterspannungs-Raumzeiger und den Zwischenkreisspannungen des Stromrichters, in

Figur 9    ist ein transienter Vorgang für die Einstellung eines neuen Arbeitspunktes der Kompensationseinrichtung in einem Zeigerdiagramm dargestellt, in

Figur 10    ist die sogenannte Spannungs-Strom-Charakteristik der eingangs genannten Kompensationseinrichtung veranschaulicht und in

Figur 11    ist ein Blockschaltbild eines bekannten Verschiebungsblindleistungs-Regelkreises dargestellt.

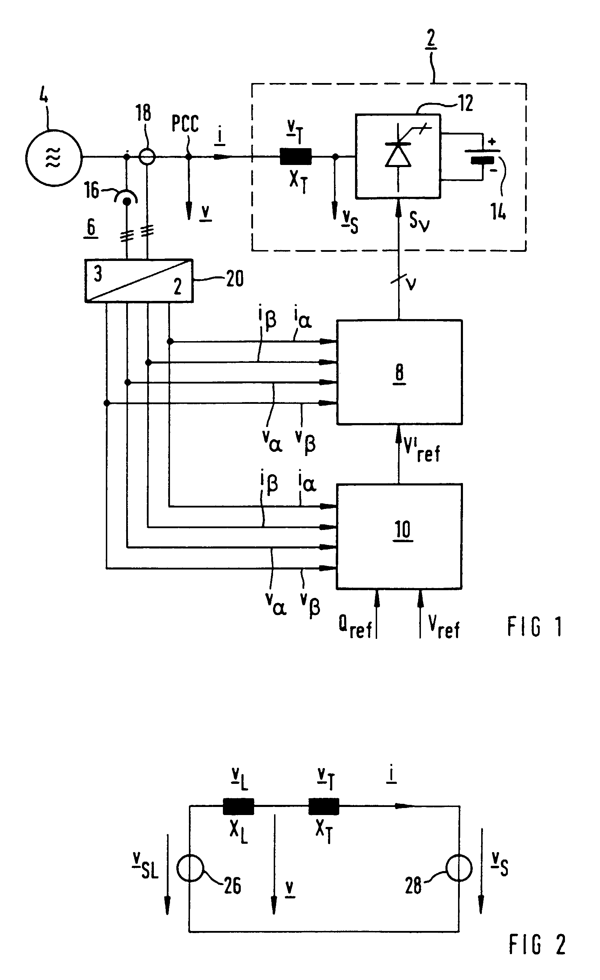

Im Blockschaltbild gemäß Figur 1 ist mit 2 eine Kompensationseinrichtung, mit 4 ein Drehstromnetz, mit 6 eine Meßwerteinrichtung, mit 8 eine Vorrichtung zur Durchführung des erfindungsgemäßen Verfahrens und mit 10 eine bekannte Verschiebungsblindleistungs-Regelung bezeichnet. Die statische Kompensationseinrichtung 2 weist einen selbstgeführten Stromrichter 12 mit wenigstens einem kapazitiven Speicher 14 und einen Transformator, der in dieser Darstellung als Induktivität $X_T$ dargestellt ist, auf. Mittels diesem Transformator ist der selbstgeführte Stromrichter 12 an das Drehstromnetz 4 angeschlossen. Der Verknüpfungspunkt bzw. Netzknoten wird mit PCC (Point of Common Coupling) bezeichnet. Für eine derartige Kompensationseinrichtung 2 sind, wie eingangs schon erwähnt, die Bezeichnungen "Static Var Generator (SVG)", "Advanced Static Var Compensator (ASVC)" oder "Static Condenser (STATCON)" gebräuchlich.

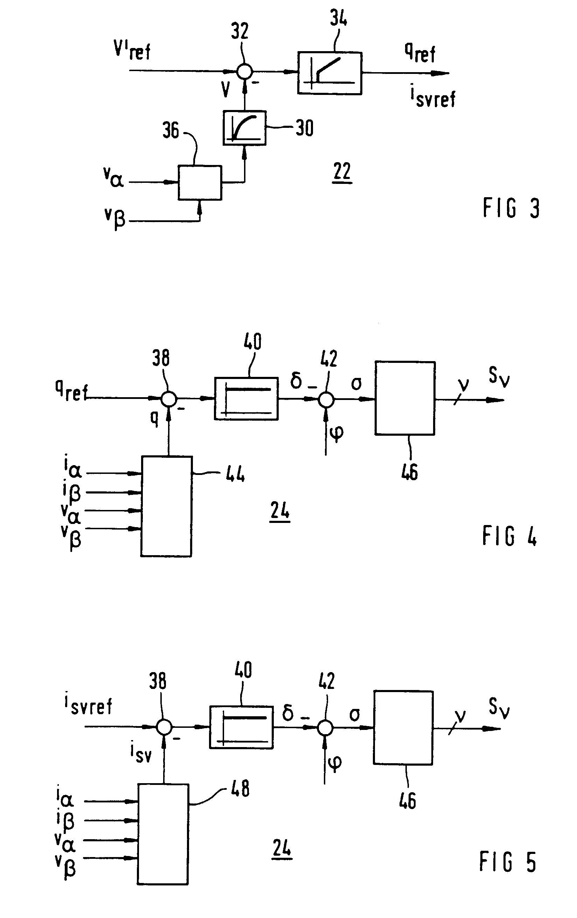

Die Meßeinrichtung 6 besteht aus einem Hochspannungs-Meßwandler 16, einer Strommeßeinrichtung 18, einer nicht näher dargestellten Meßaufbereitung und einem Koordinatenwandler 20. Die Strommeßeinrichtung 18 kann auch auf der Niederspannungsseite des Transformators der statischen Kompensationseinrichtung 2 angeordnet sein. Die Ausgänge dieses Koordinatenwandlers 20, an denen die kartesischen Koordinaten $v_\alpha$, $v_\beta$ des Netzspannungs-Raumzeigers $\underline{v}$ und die kartesischen Koordinaten $i_\alpha$, $i_\beta$ des Netzstrom-Raumzeigers $\underline{i}$ anstehen, werden jeweils der Vorrichtung 8 und der Regelung 10 zugeführt. Ein derartiger Koordinatenwandler 20 ist hinreichend aus der feldorientierten Regelung von Asynchronmaschinen bekannt. Die Vorrichtung 8 zur Durchführung des erfindungsgemäßen Verfahrens enthält eine Regelungskaskade, die aus einem überlagerten Spannungsregelkreis 22, näher dargestellt in Figur 3, und einem unterlagerten Augenblicksregelkreis 24, wobei die Figuren 4 und 5 jeweils eine Ausführungsform näher darstellen, besteht.

Die statische Kompensationseinrichtung 2 kann aus Sicht des Netzes 4 auch als Dreitor aufgefaßt werden, wobei Potentialpunkte mit einem Bezugsknoten innerhalb des Kompensators 2 jeweils die Netzanschlußklemmen eines Tores darstellen. Da es sich um ein Drei-Leiter-System handelt, enthalten die Netzströme keinen Nullsystemanteil. Da Nullsystemanteile in Spannungen mit nullsystemfreien Strömen keine Augenblicksleistung bilden, können alle Leistungsberechnungen über die Raumzeiger von Strömen und Spannungen erfolgen.

Mit den in die statische Kompensationseinrichtung 2 hineinfließenden Strömen ist die Augenblicksleistung p(t) verbunden. Sie errechnet sich in der strangweisen Darstellung aus der Summe der in die drei Tore hineinfließenden Augenblicksleistungen und kann in der Raumzeigerdarstellung entsprechend relativ einfach aus den $\alpha$- und $\beta$-Koordinaten von Netzspannungs- und Netzstrom-Raumzeiger $\underline{v}$ und $\underline{i}$ ermittelt werden. Die Augenblicksleistung, die ein um -90° gedrehter Netzspannungs-Raumzeiger $\underline{v}$ mit dem Netzstrom-Raumzeiger $\underline{i}$ bilden würde, wird als Augenblicksblindleistung q(t) bezeichnet und kann ebenfalls mit Hilfe der $\alpha$- und $\beta$-Koordinaten von Netzspannungs- und Netzstrom-Raumzeiger v und $\underline{i}$ ermittelt werden. Im stationären Zustand bei ideal sinusförmigen Netzspannungen und Netzströmen ist q(t) identisch mit der Grundschwingungsverschiebungs-Blindleistung Q. Die Wirkleistung P ergibt sich als über eine Netzperiode genommener Mittelwert der Augenblicksleistung p(t) und ist im stationären Zustand (von Verlusten in der statischen Kompensationseinrichtung abgesehen) gleich Null.

Gemäß dem Ersatzschaltbild nach Figur 2 wird das ideale Netz 4 durch die Spannungsquelle 26 mit der Spannung $\underline{v}_{SL}$ repräsentiert. Seine endliche Kurzschlußleistung wird durch die Induktivität $X_L$ dargestellt. Die Streuinduktivität der statischen Kompensationseinrichtung bzw. des Transformators zur Spannungsanpassung ist durch die Induktivität $X_T$ dargestellt. Die netzseitige Spannung $\underline{v}_S$ des selbstgeführten Stromrichters 12 wird durch die Spannungsquelle 28 repräsentiert. In Abhängigkeit des Spannungs-Raumzeigers $\underline{v}_S$ des selbstgeführten Stromrichters 12 stellt sich der Netzstrom-Raumzeiger $\underline{i}$ ein, der an der Streuinduktivität $X_T$ des Transformators zur Spannungsanpassung einen Spannungs-Raumzeiger $\underline{v}_T$ erzeugt. Durch Vorgabe des Spannungs-Raumzeigers $\underline{v}_S$ des selbstgeführten Stromrichters 12 in Betrag und Phasenlage wird der Energieaustausch zwischen der statischen Kompensationseinrichtung 2 und dem Netz 4 festgelegt.

Um die Netzspannung $\underline{v}$ am Verknüpfungspunkt PCC auf eine konstante Amplitude V zu regeln, muß die statische Kompensationseinrichtung 2 mit dem Netz 4 Verschiebungsblindleistung austauschen. In der Praxis hat das Netz 4 keine unendliche Kurzschlußleistung, sondern eine endliche. Somit ist der Spannungs-Raumzeiger $\underline{v}$ am Verknüpfungspunkt PCC gleich der Summe der Spannungs-Raumzeiger $\underline{v}_{SL}$ und $\underline{v}_L$ (Spannungsabfall an der Kurzschlußinduktivität $X_L$). Fällt nun die Amplitude des Spannungs-Raumzeigers $\underline{v}_{SL}$ schlagartig auf einen geringeren Wert ab, so ist dies unter der Voraussetzung, daß die statische Kompensationseinrichtung 2 keine Leistung mit dem Netz 4 austauscht (Leerlauf), mit einem entsprechenden Abfall der Spannung $\underline{v}$ am Verknüpfungspunkt PCC verbunden. Dieser Spannungsabfall kann dadurch rückgängig gemacht werden, daß die statische Kompensationseinrichtung 2 Verschiebungsblindleistung an das Netz abgibt (Wirkungsweise wie ein Kondensator). Dadurch erhöht sich die Amplitude V des Netzspannungs-Raumzeigers $\underline{v}$ gegenüber der Amplitude $V_{SL}$ um den Betrag $I \cdot X_L$. Umgekehrt kann eine Erhöhung der Amplitude V dadurch rückgängig gemacht werden, daß die statische Kompensationseinrichtung 2 Verschiebungsblindleistung aus dem Netz 4 aufnimmt (Wirkungsweise wie eine Drossel).

Beim Spannungsregelkreis 22 ist es vorteilhaft, von der Raumzeigerdarstellung Gebrauch zu machen. Statt dem zeitlichen Mittelwert der Amplituden der einzelnen Leiter-Erde-Spannungen am Verknüpfungspunkt PCC wird direkt der Betrag des Spannungs-Raumzeigers $\underline{v}$ am Verknüpfungspunkt PCC analysiert (dieser ist bei sinusförmigem Drehspannungssystem identisch mit den Leiter-Erde-Strangspannungsamplituden). Sinnvollerweise wird dieser Betrag noch geeignet gefiltert gemäß einem Filter 30, beispielsweise einem Verzögerungsglied erster Ordnung, um den Einfluß von Netzspannungsverzerrungen hinreichend zu reduzieren. Die gefilterte Größe V wird, wie in Figur 3 dargestellt, mit einem Spannungsamplituden-Sollwert $V'_{ref}$ mittels eines Vergleichers 32 verglichen und die Regelabweichung einem PI-Regler 34 zugeführt. Das Ausgangssignal ist ein Augenblicks-Sollwert $q_{ref}$ bzw. $i_{svref}$, der an den unterlagerten Augenblicks-Regelkreis 24 übergeben wird. Der Betrag des Spannungs-Raumzeigers $\underline{v}$ am Verknüpfungspunkt PCC wird mittels eines Betragsbildners 36 in Abhängigkeit der Spannungskoordinaten $v_\alpha$ und $v_\beta$ des Spannungs-Raumzeigers $\underline{v}$ am Verknüpfungspunkt PCC bestimmt.

In der Figur 4 ist ein Blockschaltbild einer ersten Ausführungsform des unterlagerten Augenblicksregelkreises 24 dargestellt. Da diesem Regelkreis 24 ein Augenblicksblindleistungs-Sollwert $q_{ref}$ zugeführt wird, wird diese Regelung als Augenblicksblindleistungs-Regelung bezeichnet. Dieser Regelkreis 24 besteht aus einem eingangsseitigen Vergleicher 38 mit nachgeschaltetem P-Regler 40 und einem ausgangsseitigen Differenzbildner 42. Der invertierende Eingang des Vergleichers 38 ist mit dem Ausgang einer Einrichtung 44 zur Berechnung eines Augenblicksblindleistungs-Istwertes q verknüpft. An den Eingängen dieser Einrichtung 44 stehen die Koordinaten $i_\alpha$, $i_\beta$ und $v_\alpha$, $v_\beta$

des Netzstrom-Raumzeigers $\underline{i}$ und des Netzspannungs-Raumzeigers $\underline{v}$ an. Bei dieser vorteilhaften Ausführungsform ist als Einrichtung 44 eine Recheneinrichtung vorgesehen, in der die Gleichung

$$q = 3/2 \cdot (v_\beta \cdot i_\alpha - v_\alpha \cdot i_\beta)$$

hinterlegt ist.

Der Ausgang des Differenzbildners 42 ist mit dem Eingang eines Steuersatzes 46 verknüpft, der mit Hilfe optimierter Pulsmuster aus der ermittelten Winkellage σ des Stromrichterspannungs-Raumzeigers $\underline{v}_S$ für den selbstgeführten Stromrichter 12 der statischen Kompensationseinrichtung 2 Schaltzustandssignale $S_v$ generiert. Am ersten Eingang dieses Differenzbildners 42 steht ein Winkellagewert φ des Netzspannungs-Raumzeigers $\underline{v}$ am Verknüpfungspunkt PCC an. Der zweite Eingang dieses Differenzbildners 42 ist mit dem Ausgang des P-Reglers 40 verbunden, an dem ein Phasenwinkelwert δ ansteht.

Die zweite Ausführungsform des unterlagerten Augenblicksregelkreises 24, dessen Blockschaltbild die Figur 5 zeigt, unterscheidet sich von der ersten Ausführungsform gemäß Figur 4 dadurch, daß als Sollwert ein Augenblicksblindstrom-Sollwert $i_{svref}$ dem eingangsseitigen Vergleicher 38 zugeführt wird. Der invertierende Eingang dieses Vergleichers 38 ist mit einer Einrichtung 48 zur Berechnung eines Augenblicksblindstrom-Istwertes $i_{sv}$ verbunden. Dieser Istwert $i_{sv}$ wird mittels der Koordinaten $i_\alpha$, $i_\beta$ und $v_\alpha$, $v_\beta$ des Netzstrom-Raumzeigers $\underline{i}$ und des Netzspannungs-Raumzeigers $\underline{v}$ gemäß folgender Gleichung

$$i_{sv} = (v_\beta \cdot i_\alpha - v_\alpha \cdot i_\beta)/|\underline{V}|$$

berechnet. Da bei diesem Augenblicksregelkreis 24 der Augenblicksblindstrom $i_{sv}$ zur Erzeugung der Phasenlage δ benutzt wird, wird diese auch als Augenblicksblindstrom-Regelung bezeichnet.

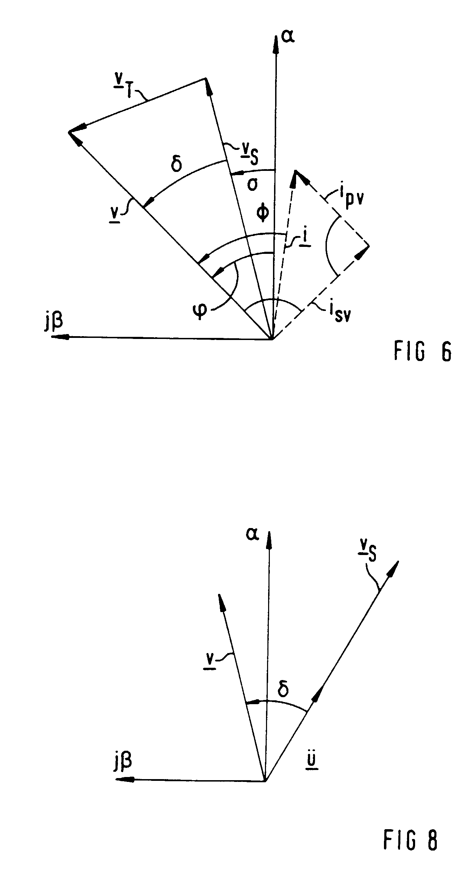

Die Figur 6 zeigt das zum Ersatzschaltbild nach Figur 2 zugehörige dynamische Raumzeiger-Diagramm. Der umlaufende Raumzeiger $\underline{v}$ ergibt sich aus den gemessenen Stranggrößen mittels der angegebenen Koordinatentransformation. Die relative Phasenlage des Stromrichterspannungs-Raumzeigers $\underline{v}_S$ zum umlaufenden Netzspannungs-Raumzeiger $\underline{v}$ wird durch den Phasenwinkel δ gekennzeichnet. Der Winkel φ gibt die Lage des umlaufenden Netzspannungs-Raumzeigers $\underline{v}$ bezogen auf die α-Achse des feststehenden rechtwinkligen Koordinatensystems α, β an, wobei der Winkel σ die Lage des umlaufenden Stromrichter-Spannungsraumzeigers $\underline{v}_S$ bezogen auf diese α-Achse angibt. Der umlaufende Netzstrom-Raumzeiger $\underline{i}$ kann bezüglich des Netzspannung-Raumzeigers $\underline{v}$ in zwei Komponenten zerlegt werden:

Eine Komponente in Richtung oder Gegenrichtung zum umlaufenden Netzspannungs-Raumzeiger $\underline{v}$, die mit $i_{pv}$ gekennzeichnet ist, und eine Komponente senkrecht zu diesem Netzspannungs-Raumzeiger $\underline{v}$, die mit $i_{sv}$ gekennzeichnet ist. Durch einfache Rechnung kann nachgewiesen werden, daß lediglich die Komponente $i_{pv}$ zur Bildung von Augenblicksleistung beiträgt. Umgekehrt enthält die Komponente $i_{sv}$ die komplette Information über die Augenblicksblindleistung. Sowohl die Augenblicksblindleistung q(t) als auch die Augenblicksleistung p(t) können sehr einfach aus den Koordinaten von Netzspannungs- und Netzstrom-Raumzeigern $\underline{v}$ und $\underline{i}$ berechnet werden. Im stationären Zustand wird zwischen der statischen Kompensationseinrichtung 2 und dem Netz 4 (von Verlusten abgesehen) keine Augenblicksleistung p(t) und damit auch keine Wirkleistung P ausgetauscht, sondern nur Augenblicksblindleistung q(t) bzw. Blindleistung Q.

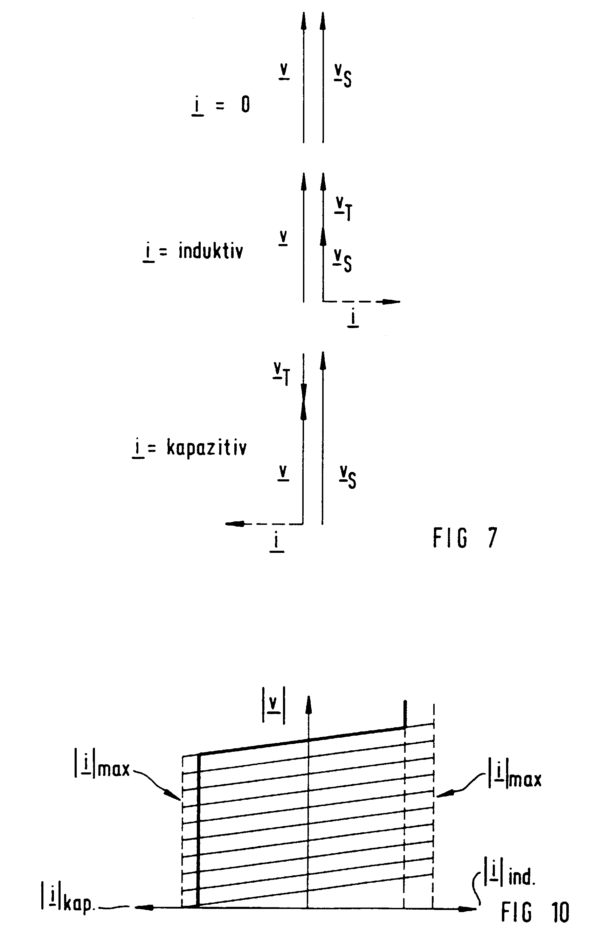

Die Zeigerbilder in der Figur 7 gelten für verschiedene stationäre Betriebszustände (Leerlauf, induktive Belastung, kapazitive Belastung). Die Tatsache, daß stationäre Blindleistung zwischen Netz 4 und der statischen Blindleistungs-Kompensationseinrichtung 2 ausgetauscht wird, ist in den Zeigerbildern daran erkennbar, daß Netzspannungs- und Netzstrom-Raumzeiger $\underline{v}$ und $\underline{i}$ immer senkrecht zueinander stehen (bei dynamischen Betriebszuständen kann diese Phasenbeziehung je nach Auftreten der Augenblicksleistung p(t) beliebig sein).

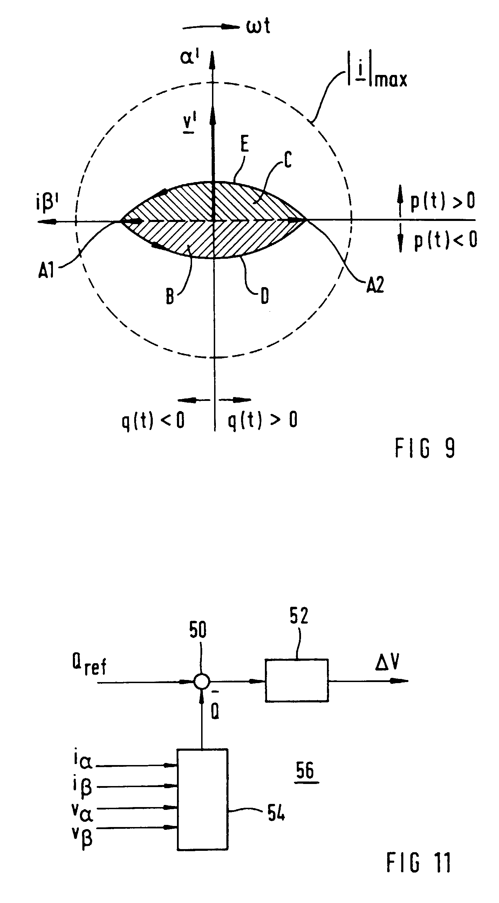

Der Zusammenhang zwischen dem Stromrichterspannungs-Raumzeiger $\underline{v}_S$ und den Zwischenkreisspannungen wird dann besonders einfach, wenn die Gleichspannungen alle gleich groß sind. Dann wird das Verhältnis durch einen Übertragungsverhältnis-Raumzeiger $\underline{ü}$ beschrieben. Unter der Annahme, daß das Winkelargument der Netzspannung ωt ist und der Phasenwinkel zwischen Stromrichterspannungs- und Netzspannungs-Raumzeiger $\underline{v}_S$ und $\underline{v}$ mit δ bezeichnet wird, gelten die entsprechenden Winkelbeziehungen gemäß dem Zeigerbild der Figur 8 und die folgenden Gleichungen:

$$\underline{v}_S(t) = \underline{ü}(t) \cdot V_{dc}$$

$$\underline{ü}(t) = |\underline{ü}| \cdot e^{j(\omega t - \delta)}$$

Mit dem optimierten Pulsmuster ist auch der Betrag des Übertragungsverhältnis-Raumzeigers $\underline{ü}$ konstant. Dies bedeutet, daß die Zwischenkreisspannungen je nach Betrag des Strom-Raumzeigers $\underline{i}$ und damit je nach Höhe der ausgetauschten Blindleistung unterschiedliche Werte annehmen. Falls die statische Kompensationseinrichtung 2 wie eine Drossel arbeitet und Blindleistung aus dem Netz 4 aufnimmt, so sind die Gleichspannungen geringer als im Leerlauf. Im kapazitiven Bereich der statischen Kompensationseinrichtung 2 sind die Gleichspannungen größer als im Leerlauf.

Dies ist auch im Zeigerbild gemäß der Figur 7 erkennbar. Umgekehrt kann festgehalten werden, daß sich die Gleichspannungen ändern müssen, um einen gewünschten Blindleistungsaustausch mit dem Netz hervorzurufen. Diese Gleichspannungsänderungen sind aber während des dazu erforderlichen transienten Auflade- oder Entladevorgangs mit dem Austausch von Energie zwischen Netz und Gleichspannungskondensatoren verbunden. Deshalb muß für Blindleistungsänderungen immer die Komponente $i_{pv}$ in den Netzströmen vorhanden sein, denn nur diese Stromkomponente $i_{pv}$ bildet mit dem Netzspannungs-Raumzeiger $\underline{v}$ Augenblicksleistung p(t).

In Figur 9 ist dieser transiente Vorgang in einem mit ωt umlaufenden Koordinatensystem α', jβ' angedeutet, wobei der Netzspannungs-Raumzeiger $\underline{v}'$ im umlaufenden Koordinatensystem α', jβ' ruht und in α'-Richtung zeigt. In diesem Koordinatensystem ist die ruhende Stromkomponente $i_{pv}$ immer in α'-oder -α'-Richtung gerichtet, die ruhende Stromkomponente $i_{sv}$ dagegen ist immer in β'- oder -β'-Richtung gerichtet. Der mit AI gekennzeichnete Punkt gilt beispielhaft für den kapazitiven Bereich der statischen Kompensationseinrichtung 2. Die Phasenlage des Strom-Raumzeigers $\underline{i}'$ bezüglich des Spannungs-Raumzeigers $\underline{v}'$ beträgt 90°. Der mit A2 bezeichnete Arbeitspunkt gilt für den induktiven Bereich. Im stationären Betrieb ist die α'-Koordinate des Strom-Raumzeigers $\underline{i}'$ immer identisch mit Null. Wie bereits erwähnt, ist für die Einstellung eines neuen Arbeitspunktes Energieaustausch zwischen der statischen Kompensationseinrichtung 2 und dem Netz 4 erforderlich, d.h., es muß während des Austauschs eine α'-Komponente ungleich Null im Netzstrom-Raumzeiger $\underline{i}'$ vorhanden sein. Zur Absenkung der an das Netz 4 abgegebenen Blindleistung (Reduzierung der kapazitiven Betriebsweise) muß die Spannung über den Zwischenkreiskondensatoren 14 des selbstgeführten Stromrichters 12 abgesenkt werden, d.h., es findet ein Energiefluß von der statischen Kompensationseinrichtung 2 in das Drehspannungsnetz 4 statt. Die dazu notwendige α'-Komponente muß negativ sein und der Weg, den die Spitze des Strom-Raumzeigers $\underline{i}'$ in diesem Koordinatensystem überstreicht (Ortskurve des Strom-Raumzeigers $\underline{i}'$ während des transienten Vorgangs), verläuft wie angedeutet unterhalb der β'-Achse. Für praktische Anwendungen ist es wichtig, daß während des transienten Vorgangs der Strom-Raumzeiger $\underline{i}'$ nicht einen von dem Schaltvermögen der abschaltbaren Leistungshalbleiterelemente des selbstgeführten Stromrichters 12 bestimmten Kreis, der durch eine unterbrochene Linie dargestellt und mit $|\underline{i}|_{max}$ bezeichnet ist, verläßt, da es sonst zu Schutzabschaltungen kommt. Außerdem ist die Form der Ortskurve (Trajektorie) ein Maß für die Güte der Regelung. Soll z.B. die statische Kompensationseinrichtung 2 möglichst schnell seinen neuen stationären Zustand erreichen, so muß die Trajektorie auf möglichst direktem Weg von einem zum anderen Arbeitspunkt führen.

Der Aufbau der Stromkomponente $i_{pv}$ (Figur 6) erfolgt durch einen entsprechenden Spannungsabfall $\underline{v}_T$ über den Streureaktanzen (Strom ist proportional zur Spannungszeitfläche). Dieser Streureaktanz-Raumzeiger $\underline{v}_T$ wird dadurch hervorgerufen, daß zwischen dem Netzspannungs-Raumzeiger $\underline{v}$ und dem Stromrichterspannungs-Raumzeiger $\underline{v}_S$ dynamisch ein Phasenwinkel δ von der Regelung gefordert wird. Sobald die gewünschte Augenblicksblindleistung q(t) erreicht ist (die kapazitiven Speicher 14 des selbstgeführten Stromrichters 12 haben die dem gewünschten Arbeitspunkt A2 entsprechende Spannung und der Netzstrom-Raumzeiger $\underline{i}$ hat die gewünschte Stromkomponente $i_{sv}$), ist der Phasenwinkel δ wieder Null (Vernachlässigung der Verlustleistungen). Die Zwischenkreisspannungen des selbstgeführten Stromrichters 12 stellen sich ohne explizite Regelung von alleine auf den zum Arbeitspunkt A1 bzw. A2 gehörenden Wert ein.

Die schraffierte Fläche B, die von der β-Achse des umlaufenden Koordinatensystems und der Trajektorie D (Ortskurve) eingeschlossen wird, enthält die Energie, die vom selbstgeführten Stromrichter 12 der stationären Kompensationseinrichtung 2 in das Netz 4 während des transienten Umladevorgangs abgegeben wird. Der transiente Vorgang beginnt beim Arbeitspunkt A1 (kapazitiver Betrieb der Kompensationseinrichtung) und endet im Arbeitspunkt A2 (induktiver Betrieb der Kompensationseinrichtung). Die schraffierte Fläche C, die von der β-Achse des umlaufenden Koordinatensystems und der Trajektorie E (Ortskurve) eingeschlossen wird, enthält die Energie, die zwischen dem Netz 4 und dem selbstgeführten Stromrichter 12 der Kompensationseinrichtung 2 während des transienten Umladevorgangs ausgetauscht wird. Dieser transiente Vorgang beginnt beim Arbeitspunkt A2 (induktiver Betrieb) und endet beim Arbeitspunkt A1 (kapazitiver Betrieb). Wie diesem Diagramm ebenfalls zu entnehmen ist, wird in den Arbeitspunkten A1 und A2 von der statischen Kompensationseinrichtung 2 nur Blindleistung in das Netz 4 gegeben bzw. aus dem Netz aufgenommen. Nur während der transienten Vorgänge wird Augenblicksleistung p(t) für den Umladevorgang der kapazitiven Speicher 14 des selbstgeführten Stromrichters 12 benötigt.

Die Figur 10 zeigt die sogenannte Spannungs-Strom-Charakteristik der statischen Kompensationseinrichtung 2 mit einem selbstgeführten Stromrichter 12 mit wenigstens einem kapazitiven Speicher 14. Jede der parallelen von links aufsteigenden Linien kennzeichnet die Arbeitskennlinie der statischen Kompensationseinrichtung 2 bei konstantem Stromrichterspannungs-Raumzeiger-Betrag $V_S$ als Funktion des Netzspannungs-Raumzeiger-Betrags V. An der Abszisse kann abgelesen werden, welcher Strom-Raumzeiger-Betrag daraus resultiert. In dieses Diagramm kann z.B. die Netzkennlinie $V = V_{SL} - I \cdot X_L$ eingetragen werden. Der Schnittpunkt mit der entsprechenden Arbeitskennlinie der statischen Kompensationseinrichtung 2 ist der sich stationär einstellende Arbeitspunkt A1 bzw. A2. Aus dem Diagramm kann dann leicht ermittelt werden, welcher Stromrichterspannungs-Raumzeiger-Betrag $V_S$ bzw. welcher Netzstrom-Raumzeiger-Betrag I benötigt wird, damit der Netzspannungs-Raumzeiger $\underline{v}$ seinen Sollwert wieder annimmt. Dies entspricht der Suche nach der Arbeitskennlinie der statischen Kompensationseinrichtung 2, welche die Netzkennlinie in dem gewünschten Arbeitspunkt A1 bzw. A2 schneidet. Der Arbeitsbereich ist in der Praxis beispielsweise durch die begrenzte thermische Belastung (dicke Linie parallel zur Ordinate), den maximalen transienten abschaltbaren Strom durch die Leistungshalbleiterschalter des Stromrichters 12 (gestrichelte Linie) und die maximal zulässige Zwischenkreisspannung des Stromrichters 12 bestimmt. Die hier beschriebene Regelung stellt den gewünschten Arbeitspunkt mit sehr guten dynamischen Betriebseigenschaften ein.

Ähnlich wie bei der Regelung für konventionelle statische Blindleistungs-Kompensatoren kann auch bei diesem Regelverfahren die statische Kompensationseinrichtung 2 mit einem selbstgeführten Stromrichter 12 quasi stationär in einen Arbeitspunkt A1 bzw. A2 geführt werden, der aus betriebstechnischer Sicht optimal ist (beispielsweise niedrige Verluste, hohe Stellreserve für Regelvorgänge). Die Regelung führt die statische Kompensationseinrichtung 2 z.B. so lange in Richtung des gewünschten Arbeitspunktes (bzw. verändert die ausgetauschte Verschiebungsblindleistung so lange), wie ein vorgegebenes Toleranzband für die Netzspannung am Verknüpfungspunkt PCC (beispielsweise 0.98... 1.02 pu) nicht verlassen wird. Diese langsame Regelung, die der Spannungsregelung überlagert ist, hat als Sollwert eine stationäre Soll-Verschiebungs-Blindleistung $Q_{ref}$ und vergleicht diese mit der tatsächlichen Verschiebungs-Blindleistung Q mittels eines Vergleichers 50, dem ein Regler 52 nachgeschaltet ist. Mit der Ausgangsgröße ΔV des Reglers 52 wird der Netzspannungssollwert $V_{ref}$ modifiziert und als modifizierter Sollwert $V'_{ref}$ dem Spannungsregelkreis 22 zugeführt. Die tatsächliche Verschiebungsblindleistung Q wird in Abhängigkeit der Koordinaten $i_\alpha$, $i_\beta$ und $v_\alpha$ und $v_\beta$ des ermittelten Netzstrom-Raumzeigers $\underline{i}$ und des ermittelten Netzspannungs-Raumzeigers $\underline{v}$ am Verknüpfungspunkt PCC mittels einer Einrichtung 54 berechnet. Dazu enthält diese Einrichtung 54 beispielsweise die Gleichungen

$$Q(t) = \frac{1}{T} \int_0^T q(t) \cdot dt$$

und

$$q(t) = 3/2(v_\beta \cdot i_\alpha - v_\alpha \cdot i_\beta)$$

Dieser Verschiebungsblindleistungs-Regelkreis 56 ist beispielsweise aus der DE-Zeitschrift "etz", Band 115, 1994, Heft 22-23, Seiten 1332 bis 1338 bekannt, wobei diese Veröffentlichung einen konventionellen statischen Kompensator, bestehend aus einer thyristorgesteuerten Drosselspule (TCR), einem thyristorgeschalteten Kondensator (TSC) und einem festen Kondensator (FC), beschreibt.

Diese langsame Regelung steht nicht im Konflikt mit der schnellen unterlagerten Regelungskaskade, da sie statt im Millisekunden-Bereich im Sekundenbereich arbeitet. Die Zeitkonstanten sind hinreichend entkoppelt.

**Patentansprüche**

1. Verfahren zur statischen und dynamischen Stützung einer Netzspannung ($\underline{v}$) an einem Netzknoten (PCC) mittels einer statischen Kompensationseinrichtung (2), die einen selbstgeführten Stromrichter (12) mit wenigstens einem kapazitiven Speicher (14) und einen Transformator aufweist, wobei in Abhängigkeit von Abweichungen eines ermittelten Betrages (V) eines Netzspannungs-Raumzeigers ($\underline{v}$) am Netzknoten (PCC) von einem vorbestimmten Betrags-Sollwert ($V'_{ref}$) des Netzspannungs-Raumzeigers ($\underline{v}$) fortlaufend Sollwerte ($q_{ref}$, $i_{svref}$) für ein unterlagertes Augenblicks-Regelverfahren bestimmt werden, bei dem in Abhängigkeit von Abweichungen eines ermittelten Augenblicks-Istwertes ($q$, $i_{sv}$) von den bereitgestellten Augenblicks-Sollwerten ($q_{ref}$, $i_{svref}$) ein die augenblickliche Phasenverschiebung eines generierten Spannungs-Raum-zeigers ($\underline{v}_s$) des selbstgeführten Stromrichters (12) zu dem ermittelten Netzspannungs-Raumzeiger ($\underline{v}$) angebenden Phasenwinkel (δ) erzeugt wird, aus dem in Abhängigkeit der Winkellage (φ) des Netzspannungs-Raumzeigers ($\underline{v}$) eine Winkellage (σ) des Spannungs-Raumzeigers ($\underline{v}_s$) des selbstgeführten Stromrichters (12) ermittelt wird, mit der mittels optimierter Pulsmuster zugehörige Schaltzustands-Signale ($S_\upsilon$) für den selbstgeführten Stromrichter (12) ausgewählt werden.

2. Verfahren nach Anspruch 1, wobei als Augenblickswert für das unterlagerte Augenblicks-Regelverfahren die Augenblicksblindleistung (q) verwendet wird.

3. Verfahren nach Anspruch 1, wobei als Augenblickswert für das unterlagerte Augenblicks-Regelverfahren die Augenblicksblindstrom-Komponente ($i_{sv}$) verwendet wird.

4. Verfahren nach Anspruch 2, wobei der Augenblicksblindleistungs-Istwert (q) aus den Koordinaten ($v_\alpha$, $v_\beta$, $i_\alpha$, $i_\beta$) eines ermittelten Netzspannungs-

Raumzeigers (v) und eines ermittelten Netzstrom-Raumzeigers (i) gemäß der Gleichung:

$$q = 3/2 \, (v_\beta \cdot i_\alpha - v_\alpha \cdot i_\beta)$$

bestimmt wird.

5. Verfahren nach Anspruch 3, wobei die Augenblicks-blindstrom-Istwert ($i_{sv}$) aus Koordinaten ($v_\alpha$, $v_\beta$, $i_\alpha$, $i_\beta$) eines ermittelten Netzspannungs-Raumzeigers (v) und eines ermittelten Netzstrom-Raumzeigers (i) und eines ermittelten Betragswertes (|v|) des Netzspannungs-Raumzeigers (v) gemäß der Gleichung:

$$i_{sv} = (v_\beta \cdot i_\alpha - v_\alpha \cdot i_\beta) \, / \, |v|$$

bestimmt wird.

6. Vorrichtung (8) zur Durchführung des Verfahrens nach Anspruch 1 für eine statische Kompensationseinrichtung (2), die einen selbstgeführten Stromrichter (12) mit wenigstens einem kapazitiven Speicher (14) und einen Transformator aufweist, wobei diese Vorrichtung einen Spannungsregelkreis (22) mit unterlagertem Augenblicksregelkreis (24) aufweist, wobei der Ausgang dieses Augenblicksregelkreises (24) mit einem zweiten Eingang eines Differenzbildners (42) verknüpft ist, an dessen erstem Eingang ein Winkellagewert (φ) eines ermittelten Netzspannungs-Raumzeigers (v) am Netzknoten (PCC) ansteht und dessen Ausgang mit einem Steuersatz (46) des selbstgeführten Stromrichters (12) der statischen Kompensationseinrichtung (2) verknüpft ist.

7. Vorrichtung (8) nach Anspruch 6, wobei der Spannungsregelkreis (22) einen Vergleicher (32) mit nachgeschaltetem Regler (34) und einen Netzspannungs-Betragsbildner (36) aufweist, wobei am nichtinvertierenden Eingang des Vergleichers (32) ein vorbestimmter Betrags-Sollwert (V'$_{ref}$) des Netzspannungs-Raumzeigers (v) am Netzknoten (PCC) ansteht.

8. Vorrichtung (8) nach Anspruch 6, wobei der unterlagerte Augenblicksregelkreis (24) einen Vergleicher (38) mit nachgeschaltetem Regler (40) und eine Einrichtung (44 bzw. 48) zur Berechnung eines Augenblicks-Istwertes (q, $i_{sv}$) aufweist, wobei diese Einrichtung (44 bzw. 48) ausgangsseitig mit dem invertierenden Eingang des Vergleichers (38) verknüpft ist und der nichtinvertierende Eingang des Vergleichers (38) mit dem Ausgang des Reglers (34) des Spannungsregelkreises (22) verknüpft ist.

9. Vorrichtung (8) nach Anspruch 8, wobei als Einrichtung (44 bzw. 48) zur Berechnung eines Augenblicks-Istwertes (q, $i_{sv}$) eine Recheneinrichtung vorgesehen ist, in der die Gleichung gemäß Anspruch 4 oder gemäß Anspruch 5 abgelegt ist.

## Claims

1. Method for static and dynamic support of a grid system voltage (v) at a network node (PCC) by means of a static power factor correction device (2) which has a transformer and a self-commutated converter (12) with at least one capacitive energy store (14), reference values (q$_{ref}$, $i_{svref}$) for a secondary instantaneous control method being determined continuously as a function of errors between a determined magnitude (V) of a grid system voltage space vector (v) at the network node (PCC) and a predetermined magnitude reference value (V'$_{ref}$) of the grid system voltage space vector (v), in which secondary instantaneous control method a phase angle (δ) is produced as a function of errors between a determined instantaneous actual value (q, $i_{sv}$) and the instantaneous reference values (q$_{ref}$, $i_{svref}$) provided, which phase angle (δ) indicates the instantaneous phase shift of a generated voltage-space vector (v$_s$) of the self-commutated converter (12) with respect to the determined grid system voltage space vector (v), and from which an angle (σ) is determined for the voltage space vector (v$_s$) of the self-commutated converter (12) as a function of the angle (φ) of the grid system voltage space vector (v), by means of which angle (σ) associated switching state signals (S$_\upsilon$) are selected for the self-commutated converter (12) by means of optimized pulse patterns.

2. Method according to Claim 1, the instantaneous reactive volt-amperes (q) being used as the instantaneous value for the secondary instantaneous control method.

3. Method according to Claim 1, the instantaneous reactive current component ($i_{sv}$) being used as the instantaneous value for the secondary instantaneous control method.

4. Method according to Claim 2, the instantaneous reactive volt-ampere actual value (q) being determined from the coordinates ($v_\alpha$, $v_\beta$, $i_\alpha$, $i_\beta$) of a determined grid system voltage space vector (v) and of a determined grid system current space vector (i) using the equation:

$$q = 3/2 \, (v_\beta \cdot i_\alpha - v_\alpha \cdot i_\beta)$$

5. Method according to Claim 3, the instantaneous re-

active current actual value ($i_{sv}$) being determined from coordinates ($v_\alpha$, $v_\beta$, $i_\alpha$, $i_\beta$) of a determined grid system voltage space vector ($\underline{v}$), of a determined grid system current space vector ($\underline{i}$) and of a determined magnitude value ($|\underline{v}|$) of the grid system voltage space vector ($\underline{v}$) using the equation:

$$i_{sv} = (v_\beta \cdot i_\alpha - v_\alpha \cdot i_\beta) / |\underline{v}|$$

6. Apparatus (8) for carrying out the method according to Claim 1 for a static power factor correction device (2), which has a transformer and a self-commutated converter (12) with at least one capacitive energy store (14), this apparatus having a voltage control loop (22) with a secondary instantaneous control loop (24), the output of this instantaneous control loop (24) being linked to a second input of a subtractor (42) to whose first input an angle value ($\phi$) of a determined grid system voltage space vector ($\underline{v}$) at the network node (PCC) is applied, and whose output is linked to a drive element (46) of the self-commutated converter (12) of the static power factor correction device (2).

7. Apparatus (8) according to Claim 6, the voltage control loop (22) having a grid system voltage magnitude generator (36) and a comparator (32) with a downstream regulator (34), a predetermined magnitude reference value ($V'_{ref}$) of the grid system voltage space vector ($\underline{v}$) at the network node (PCC) being applied to the non-inverting input of the comparator (32).

8. The apparatus (8) according to Claim 6, the secondary instantaneous control loop (24) having a comparator (38) with a downstream regulator (40) and having a device (44 or 48, respectively) for calculating an instantaneous actual value (q, $i_{sv}$), this device (44 or 48, respectively) being linked on the output side to the inverting input of the comparator (38), and the non-inverting input of the comparator (38) being linked to the output of the regulator (34) of the voltage control loop (22).

9. The apparatus (8) according to Claim 8, the device (44 or 48, respectively) for calculating an instantaneous actual value (q, $i_{sv}$) being a computation device in which the equation according to Claim 4 or according to Claim 5 is stored.

**Revendications**

1. Procédé pour le soutien statique et dynamique d'une tension de réseau ($\underline{v}$) à un noeud de réseau (PCC) au moyen d'un dispositif de compensation statique (2), qui comporte un convertisseur autocommuté (12) ayant au moins un accumulateur capacitif (14) et un transformateur, dans lequel, en fonction d'écarts d'une norme déterminée (V) d'un vecteur spatial de tension de réseau ($\underline{v}$) au noeud de réseau (PCC) par rapport à une valeur de consigne de norme prescrite (V'ref) du vecteur spatial de tension de réseau ($\underline{v}$), on détermine en permanence des valeurs de consigne ($q_{ref}$, isvref) pour un procédé de régulation instantané subordonné dans lequel, en fonction d'écarts d'une valeur réelle instantanée déterminée (q, $i_{sv}$) par rapport aux valeurs de consigne instantanées fournies ($q_{ref}$, $i_{svref}$), on produit un angle de phase ($\delta$) qui indique le déphasage instantané d'un vecteur spatial de tension produit ($\underline{v}_S$) du convertisseur autocommuté (12) par rapport au vecteur spatial de tension de réseau déterminé ($\underline{v}$) et à partir duquel, en fonction de la relation de phase ($\varphi$) du vecteur de tension de réseau ($\underline{v}$), on détermine une relation angulaire ($\sigma$) du vecteur spatial de tension ($\underline{v}_S$) du convertisseur autocommuté (12) par laquelle on sélectionne, au moyen de modèles d'impulsions optimisés, des signaux d'état de commutation associés ($S_v$) pour le convertisseur autocommuté (12).

2. Procédé selon la revendication 1, dans lequel on utilise comme valeur instantanée pour le procédé de régulation instantané subordonné la puissance réactive instantanée (q).

3. Procédé selon la revendication 1, dans lequel on utilise comme valeur instantanée pour le procédé de régulation instantané subordonné la composante de courant réactif instantanée ($i_{sv}$).

4. Procédé selon la revendication 2, dans lequel on détermine la valeur réelle de puissance réactive instantanée (q) à partir des coordonnées ($v_\alpha$, $v_\beta$, $i_\alpha$, $i_\beta$) d'un vecteur de tension spatial de réseau déterminé ($\underline{v}$) et d'un vecteur spatial de courant de réseau déterminé ($\underline{i}$) selon la relation :

$$q = 3 / 2\,(v_\beta \cdot i_\alpha - v_\alpha \cdot i_\beta).$$

5. Procédé selon la revendication 3, dans lequel on détermine la valeur réelle de courant réactif instantané ($i_{sv}$) à partir des coordonnées ($v_\alpha$, $v_\beta$, $i_\alpha$, $i_\beta$) d'un vecteur spatial de tension de réseau déterminé ($\underline{v}$) et d'un vecteur spatial de courant de réseau déterminé ($\underline{i}$) et d'une valeur de norme déterminée ($|\underline{v}|$) du vecteur spatial de tension de réseau ($\underline{v}$) selon la relation :

$$i_{sv} = (v_\beta \cdot i_\alpha - v_\alpha \cdot i_\beta) / |\underline{v}|.$$

6. Dispositif (8) pour la mise en oeuvre du procédé selon la revendication 1 pour un dispositif de compensation statique (2), qui comporte un convertisseur autocommuté (12) ayant au moins un accumulateur capacitif (14) et un transformateur, dans lequel ce dispositif comporte un circuit de régulation de tension (22) ayant un circuit de régulation instantané subordonné (24), dans lequel la sortie de ce circuit de régulation instantané (24) est reliée à une deuxième entrée d'un soustracteur (42) dont la première entrée reçoit une valeur de relation angulaire ($\varphi$) d'un vecteur spatial de tension de réseau déterminé ($\underline{v}$) au noeud de réseau (PCC) et dont la sortie est reliée à un élément de déclenchement (46) du convertisseur autocommuté (12) du dispositif de compensation statique (2) .

7. Dispositif (8) selon la revendication 6, dans lequel le circuit de régulation de tension (22) comporte un comparateur (32) ayant un régulateur (34) branché du côté aval et un dispositif de calcul de norme de tension de réseau (36), l'entrée non inversée du comparateur (32) recevant une valeur de consigne de norme prescrite (V'ref) du vecteur spatial de tension de réseau ($\underline{v}$) au noeud de réseau (PCC).

8. Dispositif (8) selon la revendication 6, dans lequel le circuit de régulation instantané subordonné (24) comporte un comparateur (38) ayant un régulateur (40) branché du côté aval et un dispositif (44 ou 48) pour le calcul d'une valeur réelle instantanée ($q$, $i_{sv}$), ce dispositif (44 ou 48) étant relié en sortie à l'entrée inversée du comparateur (38) et l'entrée non inversée du comparateur (38) étant reliée à la sortie du régulateur (34) du circuit de régulation de tension (22).

9. Dispositif (8) selon la revendication 8, dans lequel il est prévu comme dispositif (44 ou 48) destiné au calcul d'une valeur réelle instantanée ($q$, $i_{sv}$) un dispositif de calcul, dans lequel la relation selon la revendication 4 ou selon la revendication 5 est mémorisée.

FIG 1

FIG 2

FIG 3

FIG 4

FIG 5

FIG 6

FIG 8

$\underline{i} = 0$

$\underline{v}$    $\underline{v}_S$

$\underline{i} = $ induktiv

$\underline{v}$    $\underline{v}_T$

$\underline{v}_S$

$\underline{i}$

$\underline{v}_T$

$\underline{i} = $ kapazitiv

$\underline{v}$    $\underline{v}_S$

$\underline{i}$

FIG 7

$|\underline{v}|$

$|\underline{i}|_{max}$

$|\underline{i}|_{max}$

$|\underline{i}|_{kap.}$

$|\underline{i}|_{ind.}$

FIG 10

15

FIG 9

FIG 11